# FASCICULE DE BREVET EUROPEEN

(11) **EP 3 126 156 B1**
(45) Date de publication et mention de la délivrance du brevet: **24.10.2018**
(21) Numéro de dépôt: 14805844.9
(22) Date de dépôt: 27.11.2014
(51) Int. Cl.: B60C 9/11, B29D 30/38, B29D 30/72, B60C 1/00, B60C 9/18, B60C 13/00

(54) **PNEUMATIQUE COMPRENANT UN TRICOT À PROPRIÉTÉS VARIABLES**
REIFEN MIT EINEM TRIKOT MIT WECHSELHAFTEN EIGENSCHAFTEN
TIRE COMPRISING A KNITTED FABRIC WITH VARIABLE PROPERTIES

(30) Priorité: 01.04.2014 FR 1452855
(43) Date de publication de la demande: 08.02.2017
(73) Titulaire: Compagnie Générale des Etablissements Michelin, 63000 Clermont-Ferrand (FR)
(72) Inventeur: LE CLERC, Christophe, F-63040 Clermont-Ferrand Cedex 9 (FR); CORNILLE, Richard, F-63040 Clermont-Ferrand Cedex 9 (FR); PINEAU, Geneviève, F-63040 Clermont-Ferrand Cedex 9 (FR); LEGRAND, Xavier, F-59056 Roubaix (FR); OSTYN, Hubert, F-59056 Roubaix (FR); COLOT, Marc-Antoine, F-59056 Roubaix (FR); TANCHAUD, Guillaume, F-59056 Roubaix (FR)
(74) Mandataire: Desbordes, Guillaume
(86) Numéro de dépôt international: PCT/EP2014/075762
(87) Numéro de publication internationale: WO 2015/149886

(56) Documents cités:
- WO-A1-2013/017327
- BE-A- 355 976
- FR-A- 1 295 187

## Description

L'invention a pour objet un pneumatique comprenant un tricot ainsi qu'un procédé de fabrication d'un tel pneumatique.

L'invention s'applique à tout type de véhicule mais est préférentiellement destinée à des véhicules de tourisme, des véhicules à deux roues tels qu'un motocycle ou un vélo, des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

On connait du document WO2013017327 un pneumatique pour véhicule de tourisme comprenant une armature de carcasse ancrée dans deux bourrelets et surmontée radialement par un sommet comprenant une armature de sommet et une bande de roulement, cette dernière étant réunie aux bourrelets par deux flancs. Le pneumatique comprend une armature additionnelle, agencée notamment dans le flanc, et comprenant un tricot. Lors de la conformation du pneumatique, le tricot, grâce à son élasticité, suit avantageusement la déformation imposée par la conformation du pneumatique.

Toutefois, lors de cette conformation, les différentes zones du pneumatique ne sont pas conformées de façon identique. En effet, les différentes zones sont déformées entre un état au repos et un état conformé. Le taux de conformation, c'est-à-dire la différence relative entre les dimensions à l'état conformé et à l'état au repos est différent selon les zones ce qui a pour conséquence d'imposer au tricot des déformations plus importantes dans certaines zones par rapport à d'autres. Ainsi, une fois conformé, le tricot présente des zones dans lesquelles ce dernier est plus déformé que dans d'autres ce qui a pour conséquence de différencier la capacité de renforcement du tricot en fonction de ces zones.

Ainsi, les zones les plus déformées pendant la conformation présentent une capacité de renforcement certes supérieure par rapport aux zones les moins déformées (la force est une fonction croissante de l'allongement), mais avec toutefois un allongement déjà consommé de façon importante. A l'inverse, les zones les moins déformées pendant la conformation présentent une capacité de renforcement inférieure aux zones les plus déformées mais en conservant une bonne réserve d'allongement.

L'invention a pour but de réduire la différence de capacité de renforcement et d'allongement entre différentes zones du tricot générée lors de la conformation du pneumatique.

A cet effet l'invention a pour objet un pneumatique conforme à la revendication 1.

La norme ISO 13934-1 :2013 indique comment obtenir la courbe force-allongement d'un tricot du pneumatique selon l'invention. La norme indique précisément comment déterminer, à partir de cette courbe force-allongement, l'allongement à la rupture et la force maximale, notamment le nombre d'essais, le calcul et l'expression des résultats relatifs à ces grandeurs. L'homme du métier saura tout aussi bien, à partir de cette courbe force-allongement, déterminer les forces à 50% et 100% d'allongement, calculer et exprimer les résultats relatifs à ces grandeurs d'une façon identique. En particulier, on a réalisé la courbe force-allongement sur des échantillons ayant une longueur égale à 100 mm et une largeur égale à 50 mm ± 0,5 mm. Lorsque cela était impossible en raison des dimensions de l'échantillon, on a fabriqué un échantillon comprenant deux zones standards permettant de positionner les mords de traction entre lesquelles était intercalée la zone à caractériser. Les deux zones standards comprennent un tricot identique (notamment même contexture, même élément filaire) à la dernière colonne ou la dernière rangée de la zone à caractériser qu'elle prolonge.

L'obtention des courbes force-allongement des première et deuxième zones se fait sur des étoffes isolées du pneumatique, préalablement à son intégration dans le pneumatique, c'est-à-dire dépourvues de matrice d'élastomère entre les mailles du tricot.

Par définition un tricot est un élément de renfort comprenant des mailles. Chaque maille comprend une boucle entrelacée avec une autre boucle. Ainsi, on distingue un tricot qui est un textile à mailles d'un tissu qui est un textile comprenant des fils de trame et des fils de chaine, les fils de trame étant sensiblement parallèles les uns aux autres et les fils de chaine étant également sensiblement parallèles les uns aux autres.

On distingue le tricot à mailles cueillies (ou tricot trame) et le tricot à mailles jetées (ou tricot chaîne). Dans le tricot à mailles cueillies, les mailles sont formées essentiellement dans la direction selon laquelle les boucles d'une même rangée sont agencées les unes à côtés des autres (selon la largeur du tricot). Dans le tricot à mailles jetées, les mailles sont formées essentiellement dans la direction selon laquelle les boucles d'une même colonne sont agencées les unes à côtés des autres (selon la longueur du tricot).

Le tricot peut avoir différentes contextures. Par contexture, on entend le mode d'entrelacement des fils formant un motif répétitif sur le tricot. Parmi ces contextures, et sans que celles-ci soient limitatives, on citera le jersey, le jersey piqué, la côte 1*1, la côte anglaise, la côte interlockée, la côte perlée pour les tricots à mailles cueillies et la charmeuse, l'atlas pour les tricots à mailles jetées.

Grâce au tricot présentant des première et deuxième zones différenciées, le pneumatique selon l'invention permet de réduire la différence de capacité de renforcement et d'allongement entre différentes zones du tricot générée lors de la conformation du pneumatique.

Dans le cas où la deuxième zone du tricot est agencée dans une zone du pneumatique subissant une conformation plus importante que la zone du pneumatique dans laquelle est agencée la première zone du tricot, le tricot du pneumatique selon l'invention prévoient que la force à 100% d'allongement FT₁₀₀ de la première zone soit supérieure à la force à 100% d'allongement FS₁₀₀ de la deuxième zone de sorte que, la force (ou la capacité de renforcement) étant une fonction croissante de l'allongement, pour une force donnée (ou une capacité de renforcement souhaitée) l'allongement de la première zone du tricot soit inférieure à l'allongement de la deuxième zone du tricot, cette dernière pouvant ainsi épouser la conformation plus importante du pneumatique dans cette zone.

De préférence, chaque première et deuxième zone présente respectivement, au moins selon l'une des directions principale ou transverse, une force à 50 % d'allongement FT₅₀ et FS₅₀ vérifiant FS₅₀< FT₅₀, chaque force FT₅₀ et FS₅₀ étant déterminée à partir d'une courbe force-allongement obtenue en appliquant la norme ISO 13934-1:2013 au tricot préalablement à son intégration dans le pneumatique.

Avantageusement, FT₁₀₀ et FS₁₀₀ vérifient FT₁₀₀/FS₁₀₀>1,05, de préférence FT₁₀₀/FS₁₀₀>1,10 et plus préférentiellement FT₁₀₀/FS₁₀₀>1,15.

Avantageusement, FT₁₀₀ et FS₁₀₀ vérifient FT₁₀₀/FS₁₀₀<2,00, de préférence FT₁₀₀/FS₁₀₀<1,80 et plus préférentiellement FT₁₀₀/FS₁₀₀<1,60.

Les forces à 50% et 100% d'allongement sont mesurées sur le tricot nu préalablement à son intégration dans le pneumatique.

De façon optionnelle, la deuxième zone est agencée radialement à l'extérieur de la première zone.

Dans un mode de réalisation, chaque force à 100% d'allongement FT₁₀₀ et FS₁₀₀ de chaque première et deuxième zone est mesurée selon une direction du tricot sensiblement parallèle à la direction circonférentielle du pneumatique. En effet, la direction circonférentielle est la direction selon laquelle les différences de taux de conformation sont les plus importantes.

La première zone diffère de la deuxième zone de par au moins une caractéristique choisie parmi la contexture, la taille de maille, la densité linéique de colonnes de mailles mesurée selon la norme NF EN 14971, la densité linéique de rangées de mailles mesurée selon la norme NF EN 14971, la densité surfacique de mailles mesurée selon la norme NF EN 14971 ou un mélange de ces caractéristiques.

D'autres caractéristiques peuvent être utilisées pour différencier les première et deuxième zones, comme par exemple, dans le cas où le tricot est constitués d'un ou de plusieurs éléments filaires, la nature du matériau dans lequel est constitué les éléments filaires. En particulier, dans le cas d'éléments filaires comprenant des brins multifilamentaires surtordus puis retordus, on pourra utiliser le titre et la torsion de ces éléments filaires comme caractéristiques différenciantes entre les première et deuxième zones.

De préférence, la direction générale principale du tricot est sensiblement parallèle à la direction radiale du pneumatique.

De préférence, la direction générale transverse du tricot est sensiblement parallèle à la direction circonférentielle du pneumatique.

Avantageusement, les directions principale et transverse font, l'une par rapport à l'autre, un angle compris entre 75° et 105°, de préférence entre 85° et 95°.

Dans un mode de réalisation, la densité surfacique de mailles du tricot, mesurée selon la norme NF EN 14971, est inférieure ou égale à 700 mailles.cm⁻², de préférence à 100 mailles.cm⁻² et plus préférentiellement à 75 mailles.cm⁻².

Dans un mode de réalisation, la densité surfacique de mailles du tricot, mesurée selon la norme NF EN 14971, est supérieure ou égale à 5 mailles.cm⁻², de préférence à 10 mailles.cm⁻² et plus préférentiellement à 15 mailles.cm⁻².

De préférence, le tricot est constitué d'un ou de plusieurs éléments filaires d'un matériau non élastomérique.

Avantageusement, le ou chaque matériau non élastomérique est choisi parmi un polyester, un polyamide, une polycétone, un alcool polyvinylique, une cellulose, une fibre minérale, une fibre naturelle ou un mélange de ces matériaux.

Parmi les polyesters, on citera le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Parmi les polyamides, on citera un polyamide aliphatique comme le nylon ou un polyamide aromatique comme l'aramide. Parmi les alcools polyvinyliques, on citera le Kraton ®. Parmi les celluloses, on citera la rayonne. Parmi les fibres minérales, on citera les fibres de verre et de carbone. Parmi les fibres naturelles, on citera les fibres de chanvre ou de lin.

Avantageusement, le ou chaque élément filaire comprend au moins un brin multifilamentaire comprenant plusieurs monofilaments élémentaires.

Dans une variante dans laquelle le tricot comprend une pluralité de brins multifilamentaires, tous les brins multifilamentaires sont réalisés dans un même matériau. Dans une autre variante dans laquelle le tricot comprend une pluralité de brins multifilamentaires, les brins multifilamentaires sont réalisés dans au moins deux matériaux différents.

Dans un mode de réalisation, chaque élément filaire comprend un unique brin multifilamentaire appelé surtors comprenant plusieurs monofilaments élémentaires.

Dans un autre mode de réalisation, chaque élément filaire comprend plusieurs brins multifilamentaires, chacun appelé surtors, comprenant chacun plusieurs monofilaments élémentaires et assemblés ensemble en hélice pour former un retors.

De préférence, chaque élément filaire présente une ténacité supérieure ou égale à 30 cN.dtex⁻¹. Par exemple, des éléments filaires en PET présentent une de l'ordre de 70 cN.dtex⁻¹ et des éléments filaires en aramide présentent une ténacité de l'ordre de 200 cN.dtex⁻¹.

Avantageusement, chaque brin multifilamentaire comprend entre 2 et 2000 monofilaments élémentaires, de préférence entre 50 et 1000 monofilaments élémentaires.

Avantageusement, le diamètre de chaque monofilament élémentaire va de 10 µm à 100 µm, de préférence de 10 µm à 50 µm et plus préférentiellement de 12 µm à 30 µm. Un tel diamètre permet d'obtenir un tricot relativement flexible et donc compatible avec son utilisation en pneumatique.

Dans un autre mode de réalisation, chaque élément filaire comprend, de préférence est constitué de, un unique monofilament.

De préférence, le tricot est revêtu d'une couche d'une colle d'adhésion. La colle utilisée est par exemple du type RFL (Résorcinol-Formaldéhyde-Latex) ou par exemple, telle que décrite dans les publications WO2013017421, WO2013017422, WO2013017423.

Dans le pneumatique, le tricot est préférentiellement noyé dans une matrice d'élastomère. Par matrice d'élastomère (ou de caoutchouc, les deux termes étant synonymes), on entend une matrice comprenant au moins un élastomère.

De préférence, l'élastomère est un élastomère diénique. De manière connue, les élastomères diéniques peuvent être classés dans deux catégories: "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur a 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène- styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La matrice d'élastomère peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées a la fabrication de pneumatiques, tels que par exemple des charges renforçantes comme le noir de carbone ou la silice, des agents de couplage, des agents anti- vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 300°C, des agents facilitant la mise en oeuvre (processabilité) des compositions à l'état cru, des résines tackifiantes, des agents anti-réversion, des accepteurs et donneurs de méthylène tels que par exemple HMT (hexamethylènetétramine) ou H3M (hexaméthoxyméthylmélamine), des résines renforçantes (tels que résorcinol ou bismaleimide), des systèmes promoteurs d'adhésion connus du type sels métalliques par exemple, notamment des sels de cobalt, de nickel ou de lanthanide, un système de réticulation ou de vulcanisation.

De préférence, le système de réticulation de la matrice d'élastomère est un système dit de vulcanisation, c'est-à-dire a base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogenées présentant une surface BET inférieure a 450 m2/g, de préférence de 30 à 400 m2/g.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

De préférence, la matrice d'élastomère présente, à l'état réticulé, un module sécant en extension, à 10% d'allongement, qui est compris entre 4 et 80 MPa, plus préférentiellement entre 4 et 20 MPa. Les mesures de module sont effectuées en traction, sauf indication différente, selon la norme ASTM D 412 de 1998 (éprouvette "C"): on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans un mode de réalisation, chaque flanc du pneumatique comprend un unique tricot comprenant les première et deuxième zones. Dans un autre mode de réalisation, chaque flanc comprend au moins deux tricots, chaque tricot comprenant des première et deuxième zones. Dans encore un autre mode de réalisation, chaque flanc du pneumatique comprend au moins un assemblage d'au moins deux couches d'un tricot comprenant les première et deuxième zones, les deux couches étant au moins partiellement superposées l'une sur l'autre.

Afin d'atteindre les différentes propriétés du tricot, l'homme du métier saura faire varier certains paramètres du tricot comme la contexture et certains paramètres du procédé de fabrication du tricot comme le type de métier utilisé, la jauge du métier et la serre dans le cas des mailles cueillies.

Conformément à l'invention, le pneumatique comprend une armature de carcasse ancrée dans deux bourrelets et surmontée radialement par une armature de sommet elle-même surmontée d'une bande de roulement qui est réunie aux bourrelets par deux flancs, chaque flanc comprenant au moins le tricot.

En positionnant le tricot dans le flanc, on améliore la rigidité de dérive du pneumatique.

Ainsi, dans le cas d'un pincement du flanc contre la jante, le tricot peut éviter une dégradation de l'armature de carcasse.

Préférentiellement, l'armature de carcasse est ancrée dans chaque bourrelet par un retournement autour d'une structure annulaire du bourrelet de manière à former un brin aller et un brin retour.

Selon une caractéristique optionnelle, la distance radiale entre l'extrémité radialement intérieure du tricot et le plan radialement médian de la structure annulaire du bourrelet est inférieure ou égale à 15 mm, de préférence à 10 mm et plus préférentiellement à 5 mm. Le plan radialement médian est le plan séparant la structure annulaire en deux parties présentant un encombrement égal selon la direction radiale.

Selon une autre caractéristique optionnelle, la distance axiale entre l'extrémité radialement extérieure du tricot et l'extrémité axialement extérieure d'une nappe de sommet radialement adjacente au tricot est inférieure ou égale à 15 mm, de préférence à 10 mm et plus préférentiellement à 5 mm.

Selon une caractéristique optionnelle de la première zone, celle-ci s'étend radialement entre des premier et deuxième points de la première zone, le premier point de la première zone étant radialement intérieur par rapport au deuxième point de la première zone.

De préférence, le premier point de la première zone est radialement intérieur par rapport à l'équateur du pneumatique. Par « équateur » du pneumatique on entend, la hauteur radiale du point de la plus grande extension axiale de l'armature de carcasse. Dans une coupe radiale du pneumatique, l'équateur apparait comme la ligne droite axiale passant par les points ou l'armature de carcasse a sa plus grande largeur axiale lorsque le pneumatique est monté sur une jante et gonflé. Lorsque l'armature de carcasse atteint cette plus grande largeur axiale en plusieurs points, on considère la hauteur radiale du point le plus proche de la mi-hauteur H/2 du pneumatique comme étant l'équateur du pneumatique. L'équateur ainsi défini ne doit pas être confondu avec le plan médian du pneumatique.

Encore plus préférentiellement, la distance radiale entre le premier point de la première zone et le plan radialement médian de la structure annulaire du bourrelet est inférieure ou égale à 15 mm, de préférence à 10 mm et plus préférentiellement à 5 mm.

De préférence, le deuxième point de la première zone est radialement intérieur par rapport à l'équateur du pneumatique.

Encore plus préférentiellement, la distance radiale entre le deuxième point de la première zone et l'équateur du pneumatique va de 3% à 10% de la hauteur de la section du pneumatique.

Le rapport nominal d'aspect, couramment appelé rapport H/B, est défini par l'ETRTO (« European Tyre and Rim Technical Organisation »). H est la hauteur de la section du pneumatique et B est la largeur de la section du pneumatique, prise à l'équateur.

Selon une caractéristique optionnelle du pneumatique, chaque premier et deuxième point de la première zone est radialement extérieur par rapport au plan radialement médian de la structure annulaire du bourrelet.

Selon une caractéristique optionnelle de la deuxième zone, celle-ci s'étend radialement entre des premier et deuxième points de la deuxième zone, le premier point de la deuxième zone étant radialement intérieur par rapport au deuxième point de la deuxième zone.

De préférence, le premier point de la deuxième zone est radialement extérieur par rapport à l'équateur du pneumatique.

Encore plus préférentiellement, la distance radiale entre le premier point de la deuxième zone et l'équateur du pneumatique va de 3 à 10% de la hauteur de la section du pneumatique.

De préférence, la distance axiale entre le deuxième point de la deuxième zone et l'extrémité axialement extérieure d'une nappe de sommet radialement adjacente à la deuxième zone est inférieure ou égale à 15 mm, de préférence à 10 mm et plus préférentiellement à 5 mm.

Dans un mode de réalisation, l'extrémité radialement extérieure du tricot est axialement intérieure par rapport à l'extrémité axialement extérieure d'une nappe de sommet radialement adjacente au tricot.

Dans un autre mode de réalisation, l'extrémité radialement extérieure du tricot est axialement extérieure par rapport à l'extrémité axialement extérieure d'une nappe de sommet radialement adjacente au tricot.

De préférence, l'extrémité radialement extérieure du tricot est radialement intercalée entre l'armature de carcasse et l'armature de sommet.

Dans certains modes de réalisation, le tricot est agencé axialement à l'intérieur de l'armature de carcasse.

Dans un mode de réalisation préféré, le tricot forme un anneau monolithique présentant un axe de révolution sensiblement parallèle à l'axe du pneumatique.

Par anneau monolithique, on entend que chaque maille du tricot est assemblée avec au moins une autre maille du tricot. Ainsi, dans un anneau monolithique, il n'existe pas de recouvrement entre deux extrémités du tricot. Un tel anneau permet de simplifier le procédé de fabrication du pneumatique.

Dans un mode de réalisation, le pneumatique est pour des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. Dans un autre mode de réalisation, le pneumatique est pour véhicule de tourisme. Dans encore un autre mode de réalisation, le pneumatique est pour un véhicule deux roues.

L'invention a encore pour objet l'utilisation pour le renforcement d'un pneumatique d'un tricot conforme à la revendication 12

L'invention a pour autre objet un procédé de fabrication conforme à la revendication 13 d'un pneumatique conforme aux revendications 1 à 11.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon un premier mode de réalisation de l'invention comprenant au moins un tricot;
- la figure 2 est une vue schématique du développé du pneumatique de la figure 1 illustrant la répartition axiale de tricots;
- la figure 3 est une vue des détails d'un tricot du pneumatique de la figure 1 ;
- la figure 4 est un graphique illustrant des courbes force-allongement du tricot des figures 1 à 3;
- les figures 5 et 6 sont des vues analogues respectivement à celles des figures 1, 2 d'un pneumatique selon un deuxième mode de réalisation ;
- les figures 7 et 8 sont des vues analogues respectivement à celles des figures 1, 2 d'un pneumatique selon un troisième mode de réalisation ; et
- les figures 9 et 10 sont des vues analogues respectivement à celles des figures 1, 2 d'un pneumatique selon un quatrième mode de réalisation.

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point E est dit « axialement intérieur » à un point F (ou «axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H.

Le « plan médian » M du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLES DE PNEUMATIQUES SELON L'INVENTION

Dans les figures, on a représenté un repère X, Y, Z correspondant aux directions habituelles respectivement axiale (X), radiale (Y) et circonférentielle (Z) d'un pneumatique.

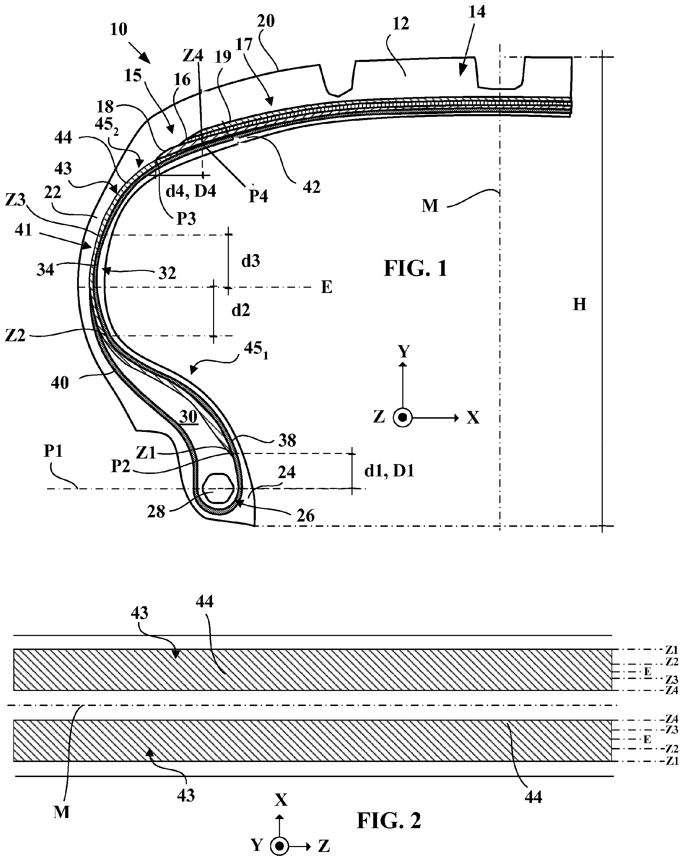

On a représenté sur les figures 1 et 2 un pneumatique conforme à un premier mode de réalisation de l'invention et désigné par la référence générale 10. Le pneumatique 10 est sensiblement de révolution autour de l'axe X. Le pneumatique 10 est ici destiné à un véhicule de tourisme. Le pneumatique représenté présente la dimension 205/55 R 16.

Le pneumatique 10 comporte un sommet 12 comprenant une armature de sommet 14 comprenant une armature de travail 15 comprenant deux nappes de travail 16, 18 d'éléments de renfort et une armature 17 de protection ou de frettage comprenant une nappe de protection 19. L'armature de sommet 14 est surmontée d'une bande de roulement 20. Ici, l'armature de protection 17, ici la nappe de protection 19, est intercalée radialement entre l'armature de travail 15 et la bande de roulement 20.

Deux flancs 22 prolongent le sommet 12 radialement vers l'intérieur. Le pneumatique 10 comporte en outre deux bourrelets 24 radialement intérieurs aux flancs 22 et réunis au sommet 12 par les flancs 22 et comportant chacun une structure annulaire de renfort 26, en l'occurrence une tringle 28, surmontée d'un masse de gomme 30 de bourrage, ainsi qu'une armature de carcasse radiale 32. L'armature de carcasse 32 est surmontée radialement par l'armature de sommet 14.

L'armature de carcasse 32 comporte de préférence une seule nappe de carcasse 34 d'éléments de renfort textiles radiaux, la nappe 34 étant ancrée à chacun des bourrelets 24 par un retournement autour de la tringle 28 de manière à former dans chaque bourrelet 24 un brin aller 38 s'étendant depuis les bourrelets 24 à travers les flancs 22 vers le sommet 12, et un brin retour 40, l'extrémité radialement extérieure du brin retour 40 étant, ici sensiblement à mi-hauteur du pneumatique 10. L'armature de carcasse 32 s'étend ainsi depuis les bourrelets 24 à travers les flancs 22 vers le sommet 12. En variante, les éléments de renfort radiaux sont métalliques. Le pneumatique 10 comprend également une nappe intérieure d'étanchéité 42, généralement en butyl, agencée axialement et radialement à l'intérieure de l'armature de carcasse 32.

Les nappes de travail 16, 18 comprennent des éléments de renfort métalliques ou textiles classiques pour l'homme du métier et formant un angle allant de 15° et 40°, de préférence allant de 20° à 30° et ici égal à 26° avec la direction circonférentielle Z du pneumatique. Les éléments de renfort des nappes de travail sont croisés d'une nappe de travail par rapport à l'autre.

La nappe de protection 19 comprend des éléments de renfort métalliques ou textiles également classiques pour l'homme du métier formant un angle allant de 0° à 10° avec la direction circonférentielle Z du pneumatique.

En outre, le pneumatique comprend une armature additionnelle 41 comprenant au moins une nappe additionnelle 43. Chaque nappe additionnelle 43 comprend au moins un tricot 44. La nappe additionnelle 43 et ici le tricot 44 sont agencés axialement à l'extérieur de l'armature de carcasse 34. Ainsi, comme illustré sur la figure 1, chaque flanc 22 comprend un tricot 44.

L'extrémité radialement extérieure P4 du tricot 44 est axialement intérieure par rapport à l'extrémité axialement extérieure P3 de la nappe de sommet 18 radialement adjacente au tricot 44. En outre, l'extrémité radialement extérieure P4 du tricot 44 est radialement intercalée entre l'armature de carcasse 32 et l'armature de sommet 14.

La distance axiale D4 entre l'extrémité radialement extérieure P4 du tricot 44 et l'extrémité axialement extérieure P3 de la nappe de sommet 18 radialement adjacente au tricot 44 est inférieure ou égale à 15 mm, de préférence à 10 mm et plus préférentiellement à 5 mm. Ici, D4=5 mm.

Le tricot 44 s'étend, dans le bourrelet, axialement entre le brin aller 38 et le brin retour 40 de l'armature de carcasse 32. En variante, on pourra envisager un mode de réalisation dans lequel le tricot s'étend, dans le bourrelet, axialement à l'extérieur du brin retour 40.

La distance radiale D1 entre l'extrémité radialement intérieure P2 du tricot 44 et le plan radialement médian P1 de la structure annulaire 26 du bourrelet 24 est inférieure ou égale à 15 mm, de préférence à 10 mm et plus préférentiellement à 5 mm. Ici D1=5 mm.

Chaque nappe de travail 16, 18, de protection 19, de carcasse 34 et additionnelle 43 comprend une matrice d'élastomère dans laquelle sont noyés les éléments de renfort de la nappe correspondante. Les compositions des matrices d'élastomère des nappes de travail 16, 18, de protection 19, de carcasse 34 et additionnelle 43 sont des compositions conventionnelles pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

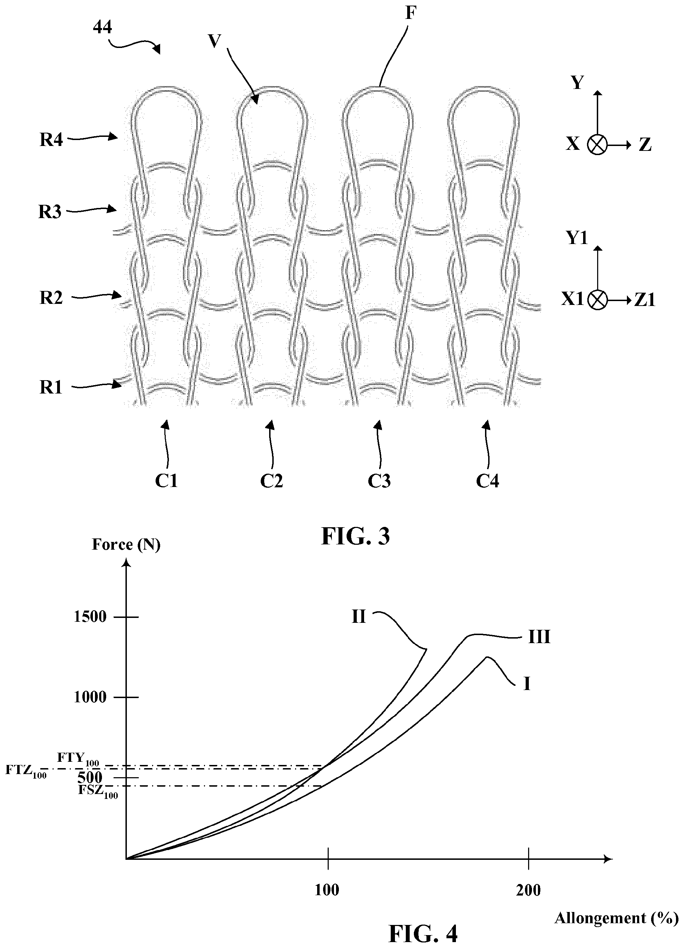

On a représenté sur la figure 3 le tricot 44. Le tricot 44 comprend des colonnes C1, C2, C3, C4 de boucles V ainsi que des rangées R1, R2, R3, R4 de boucles V. Les boucles V d'une même colonne Ci sont agencées les unes à la suite des autres sensiblement selon une direction générale dite principale Y1. Les boucles V d'une même rangée Ri sont agencées les unes à côtés des autres sensiblement selon une direction générale dite transverse Z1.

Les directions principale Y1 et transverse Z1 font, l'une par rapport à l'autre, un angle compris entre 75° et 105°, de préférence entre 85° et 95°. Ici, Les directions principale Y1 et transverse Z1 sont sensiblement perpendiculaires l'une à l'autre.

La direction générale principale Y1 fait un angle au plus égal à 30° avec la direction radiale Y du pneumatique 10. Lorsque le tricot est mis sur un support plan, la direction générale principale Y1 fait un angle ici égal à 0° avec la direction radiale Y du pneumatique 10, la direction générale principale Y1 du tricot 44 étant sensiblement parallèle à la direction radiale Y du pneumatique 10.

La direction générale transverse Z1 fait un angle au plus égal à 10° avec la direction circonférentielle Z du pneumatique 10 et ici un angle égal à 0°, la direction générale transverse Z1 du tricot 44 étant sensiblement parallèle à la direction circonférentielle Z du pneumatique 10.

Le tricot 44 présente une contexture du type jersey et a été fabriqué à façon à partir d'un procédé de tricotage classique pour l'homme du métier de ce domaine. Le tricot 44 présente, selon la direction Y1 une épaisseur allant de 0,7 à 3 mm, de préférence 0,8 à 2,6 mm et ici égal à 1,6 mm.

La densité surfacique de mailles du tricot, mesurée selon la norme NF EN 14971, est inférieure ou égale à 700 mailles.cm⁻², de préférence à 100 mailles.cm⁻² et plus préférentiellement à 75 mailles.cm⁻². La densité surfacique de mailles du tricot est également supérieure ou égale à 5 mailles.cm⁻², de préférence à 10 mailles.cm⁻² et plus préférentiellement à 15 mailles.cm⁻². En l'espèce, la densité surfacique est égale à 15 mailles.cm².

Le pneumatique 10 comprend une première zone 45₁ et une deuxième zone 45₂ du tricot 44. En revenant aux figures 1 et 2, la première zone 45₁ du tricot 44 présente un rayon de courbure inférieur au rayon de courbure de la deuxième zone 45₂ du tricot 44. La deuxième zone 45₂ est agencée radialement à l'extérieur de la première zone 45₁.

La première zone 45₁ diffère de la deuxième zone 45₂ de par au moins une caractéristique choisie parmi la contexture, la taille de maille, la densité linéique de colonnes de mailles mesurée selon la norme NF EN 14971, la densité linéique de rangées de mailles mesurée selon la norme NF EN 14971, la densité surfacique de mailles mesurée selon la norme NF EN 14971 ou un mélange de ces caractéristiques. En l'espèce, les première et deuxième zones 45₁, 45₂ diffèrent l'une de l'autre de par la densité linéique de rangées de mailles et donc également de par la densité surfacique de mailles (la densité linéique de colonnes de mailles étant identique entre les première et deuxième zones 45₁, 45₂).

On a représenté sur la figure 4 des courbes force-allongement obtenues en appliquant la norme ISO 13934-1:2013 au tricot avant son intégration dans le pneumatique. Ici, le tricot est dépourvu de matrice d'élastomère.

La courbe I illustre la variation de la force en fonction de l'allongement de la deuxième zone 45₂ du tricot 44 selon la direction transverse Z1. La courbe II illustre la variation de la force en fonction de l'allongement de la première zone 45₁ du tricot 44 selon la direction transverse Z1. La courbe III illustre la variation de la force en fonction de l'allongement du tricot selon la direction principale Y1.

Comme on peut le voir sur la figure 4, le tricot 44 présente des propriétés particulières d'allongement à la rupture et de force maximale mesurées selon la norme ISO 13934-1:2013, ainsi que des propriétés de force à 50% et 100% d'allongement déterminées à partir d'une courbe force-allongement obtenue en appliquant la norme ISO 13934-1:2013 au tricot 44 préalablement à son intégration dans le pneumatique 10.

Chaque première et deuxième zone 45₁, 45₂ présente, selon la direction principale Y1, ici la direction radiale Y du pneumatique 10, une force à 100 % d'allongement respectivement notée FTY₁₀₀ et FSY₁₀₀, chaque force FTY₁₀₀ et FSY₁₀₀ étant déterminée à partir d'une courbe force-allongement obtenue en appliquant la norme ISO 13934-1:2013. Toutefois, seule la courbe force-allongement de la première zone 45₁ a été reproduite avec FTY₁₀₀=549 N.

Chaque première et deuxième zone 45₁, 45₂ présente, selon la direction transverse Z1, ici la direction circonférentielle Z du pneumatique, une force à 100 % d'allongement respectivement notée FTZ₁₀₀ et FSZ₁₀₀ vérifiant FSZ₁₀₀<FTZ₁₀₀, chaque force FTZ₁₀₀ et FSZ₁₀₀ étant déterminée à partir d'une courbe force-allongement obtenue en appliquant la norme ISO 13934-1:2013. Ici, FT₁₀₀= FTZ₁₀₀=542 N et FS₁₀₀= FSZ₁₀₀₌462 N. On a donc FZT₁₀₀ et FSZ₁₀₀ vérifiant FT₁₀₀/FS₁₀₀ >1,05, de préférence FT₁₀₀/FS₁₀₀>1,10 et plus préférentiellement FT₁₀₀/FS₁₀₀>1,15 et FT₁₀₀/FS₁₀₀<2,00, de préférence FT₁₀₀/FS₁₀₀<1,80 et plus préférentiellement FT₁₀₀/FS₁₀₀<1,60. Ici, FT₁₀₀/FS₁₀₀=1,17.

Le tricot 44 est constitué d'un ou de plusieurs éléments filaires F d'un matériau non élastomérique. Le ou chaque matériau non élastomérique est choisi parmi un polyester, un polyamide, une polycétone, une cellulose, une fibre minérale, une fibre naturelle ou un mélange de ces matériaux.

Le ou chaque élément filaire F comprend au moins un brin multifilamentaire comprenant plusieurs monofilaments élémentaires. En l'espèce, le ou chaque élément filaire E comprend deux brins de nylon chacun de 140 tex surtordus chacun à 250 tours.m⁻¹ dans un premier sens puis retordus en hélice l'un autour de l'autre à 250 tours.m⁻¹ dans un deuxième sens opposé au premier sens.

La première zone 45₁ s'étend radialement entre des premier et deuxième points Z1, Z2 de la première zone 45₁. Le premier point Z1 est radialement intérieur par rapport au deuxième point Z2. Le premier point Z1 est également radialement intérieur par rapport à l'équateur E du pneumatique 10. Le deuxième point Z2 est radialement intérieur par rapport à l'équateur E du pneumatique 10. Chaque premier et deuxième point Z1, Z2 est radialement extérieur par rapport au plan radialement médian P1 de la structure annulaire 26 du bourrelet 24.

La distance radiale d1 entre le premier point Z1 et le plan radialement médian P1 de la structure annulaire 26 du bourrelet 24 est inférieure ou égale à 15 mm, de préférence à 10 mm et plus préférentiellement à 5 mm. Ici d1=D1=5 mm.

La distance radiale d2 entre le deuxième point Z2 et l'équateur E du pneumatique 10 va de 3% à 10% de la hauteur H de la section du pneumatique 10. Ici H=112,75 mm et d2=7 mm.

La deuxième zone 45₂ s'étend radialement entre des premier et deuxième points Z3, Z4 de la deuxième zone 45₂. Le premier point Z3 de la deuxième zone 45₂ est radialement intérieur par rapport au deuxième point Z4 de la deuxième zone 45₂. Le premier point Z3 de la deuxième zone 45₂ est radialement extérieur par rapport à l'équateur E du pneumatique 10.

La distance radiale d3 entre le premier point Z3 de la deuxième zone 45₂ et l'équateur E du pneumatique 10 va de 3% à 10% de la hauteur H de la section du pneumatique 10. Ici H=112,75 mm et d3=7 mm.

La distance axiale d4 entre le deuxième point Z4 de la deuxième zone 45₂ et l'extrémité axialement extérieure P3 de la nappe de sommet 18 radialement adjacente à la deuxième zone 45₂ est inférieure ou égale à 15 mm, de préférence à 10 mm et plus préférentiellement à 5 mm. Ici d4=D4=5 mm.

On va maintenant décrire un procédé de fabrication du pneumatique 10 tel que décrit ci-dessus. On ne décrira que les étapes principales relatives à l'invention, les autres étapes étant facilement réalisables à partir des connaissances générales de l'homme du métier.

Au cours du procédé, on forme une ébauche comprenant les bourrelets 24, les flancs 22 et l'armature de carcasse 32, ici la nappe de carcasse 34.

Dans une première variante du procédé, on noie le tricot 44 dans sa matrice d'élastomère afin d'obtenir la nappe additionnelle 43, par exemple par calandrage du tricot 44 entre deux bandes de la matrice d'élastomère. Puis, on rapporte cette nappe additionnelle 43 sur l'ébauche préalablement formée. Ensuite, on rapporte l'armature de sommet 14 et la bande de roulement 20.

Dans une deuxième variante, on rapporte une première bande de la matrice d'élastomère sur l'ébauche. Puis, on rapporte le tricot 44 sur la première bande de la matrice d'élastomère. Ensuite, on rapporte une deuxième bande de la matrice d'élastomère sur le tricot 44. Enfin, on rapporte l'armature de sommet 14 et la bande de roulement 20. Lors de la cuisson de l'ébauche pour former le pneumatique 10, la matrice d'élastomère des première et deuxième bandes flue au travers du tricot 44. Ainsi, on noie le tricot 44 dans sa matrice d'élastomère.

Dans cette deuxième variante, le tricot 44 forme un anneau monolithique présentant un axe de révolution. L'anneau est déformable radialement, c'est-à-dire perpendiculairement à son axe de révolution, entre une position au repos et une position déformée. Ainsi, on déforme radialement le tricot 44 depuis son état au repos vers son état déformé, puis on le rapporte axialement autour de l'ébauche dans son étant déformé, puis on relâche le tricot 44 depuis son état déformé de façon à ce que le tricot enserre l'ébauche. Une fois positionné sur l'ébauche, l'axe de révolution de l'anneau monolithique est sensiblement parallèle à, et confondu avec, l'axe du pneumatique.

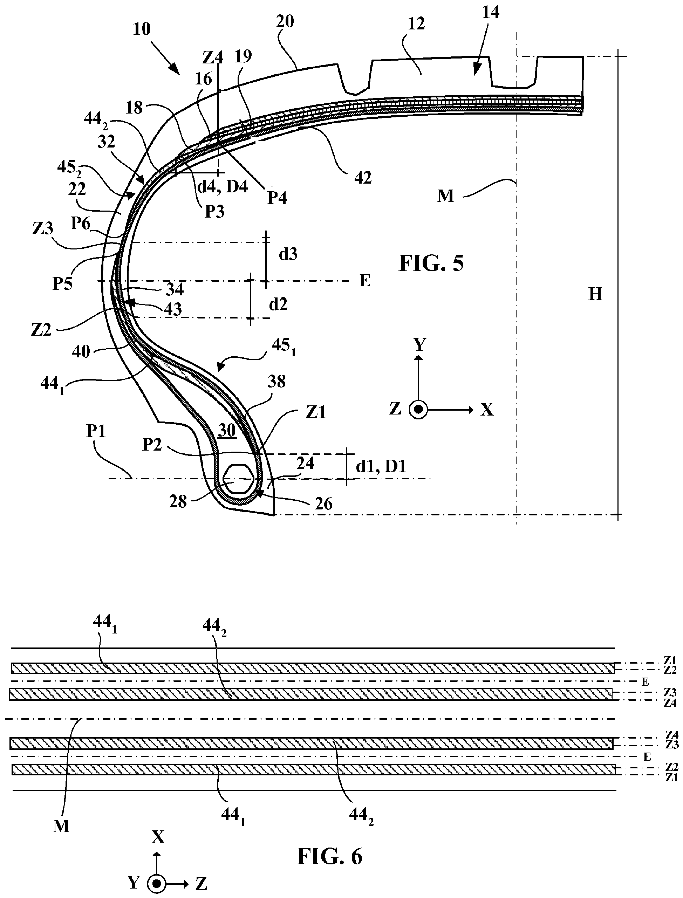

On va maintenant décrire des deuxième, troisième et quatrième modes de réalisation de l'invention respectivement en référence aux figures 5, 6 et 7, 8 et 9, 10. Les éléments analogues à ceux décrits dans le mode de réalisation précédent sont désignés par des références identiques.

Le pneumatique selon le deuxième mode de réalisation des figures 5 et 6 comprend deux tricots 44₁ et 44₂. Le tricot 44₁ comprend une extrémité radialement intérieure notée P2 et une extrémité radialement extérieure P5. Le tricot 44₂ comprend une extrémité radialement intérieure notée P6 et une extrémité radialement extérieure P4. Chaque tricot 44₁ et 44₂ comprend des premières et deuxièmes zones respectivement.

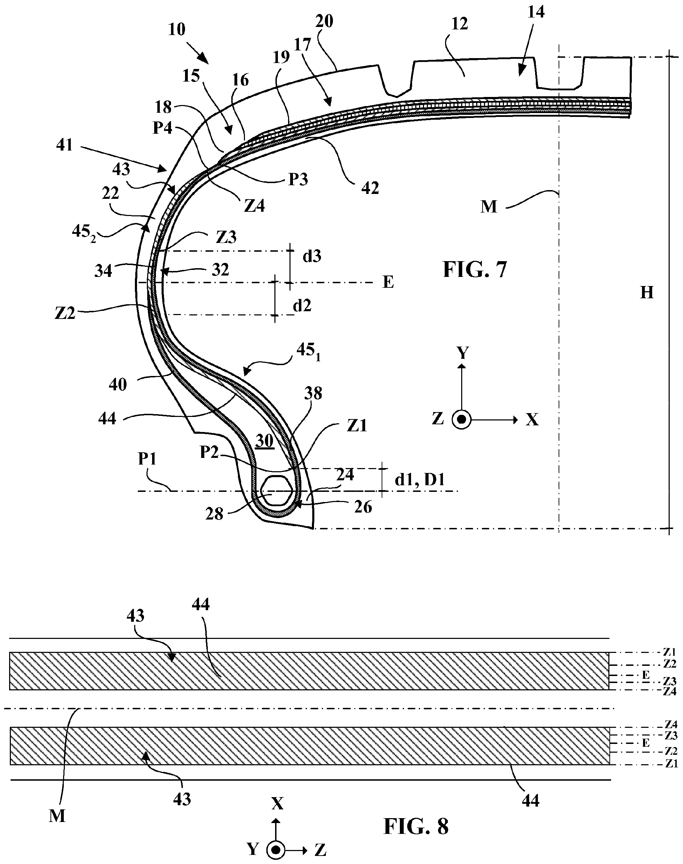

A la différence du pneumatique selon le premier mode de réalisation, le pneumatique selon le troisième mode de réalisation des figures 7 et 8 est tel que l'extrémité radialement extérieure P4 du tricot 44 est axialement extérieure par rapport à l'extrémité axialement extérieure P3 de la nappe de sommet 18 radialement adjacente au tricot 44.

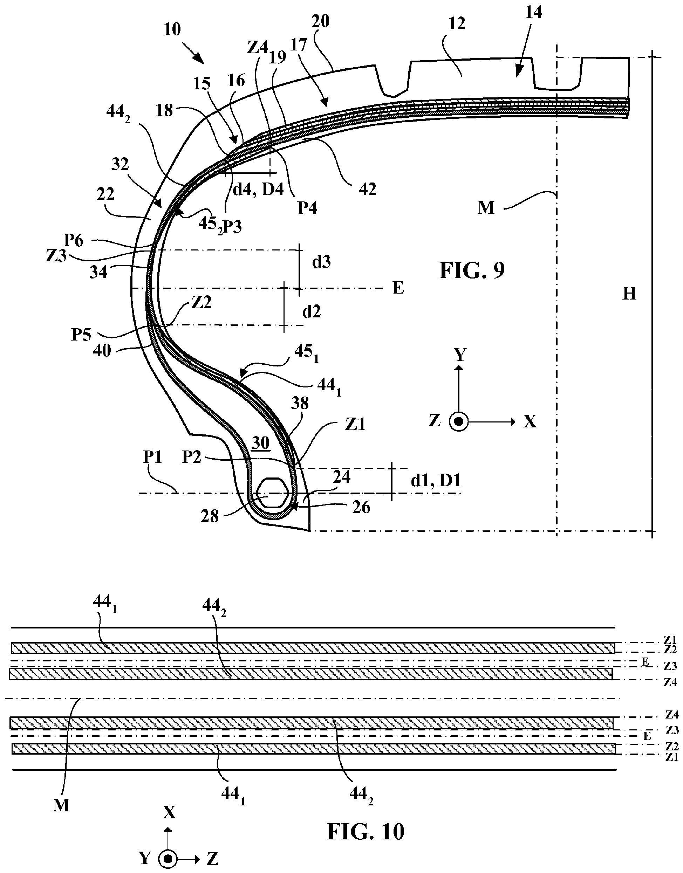

A la différence du pneumatique selon le deuxième mode de réalisation des figures 5 et 6, le pneumatique du quatrième mode de réalisation des figures 9 et 10 comprend deux tricots 44₁, 44₂, en l'espèce les tricots du deuxième mode de réalisation, agencés axialement à l'intérieur de l'armature de carcasse 32.

### TESTS COMPARATIFS

En plus de réduire la différence de capacité de renforcement et d'allongement entre différentes zones du tricot générée lors de la conformation du pneumatique, le pneumatique selon l'invention présente un excellent compromis de rigidité de dérive sous fortes sollicitations et de masse.

On a comparé le pneumatique 10 selon l'invention et trois pneumatiques T1, T2 et T3 de l'état de la technique. Le pneumatique 10 présente une architecture identique à celle du pneumatique selon le premier mode de réalisation et comprend un tricot constitué d'un ou de plusieurs éléments filaires d'un matériau non élastomérique, en l'occurrence du nylon.

Les caractéristiques du tricot 44 utilisé sont décrites dans les tableaux 1 (propriétés relatives à la force maximale, à la force à rupture, à l'allongement à 50% et 100% selon la norme ISO 13934-1:2013 appliquée au tricot préalablement à son intégration dans le pneumatique) et 2 (propriétés relatives à la densité linéique de rangées de mailles, la densité linéique de colonnes de mailles, la densité surfacique de mailles selon la norme NF EN 14971 de 2006) ci-dessous.

**Tableau 1**

| **Pneumatique** | **10** | | |
|---|---|---|---|
| | **Direction principale Y1 - Première zone 45₁** | **Direction transverse Z1 - Première zone 45₁** | **Direction transverse Z1 - Deuxième zone 45₂** |
| **Courbe (****Fig. 4****)** | III | II | I |
| **Nature du brin** | N94/2 | N94/2 | N94/2 |
| **Contexture du tricot** | Jersey piqué | Jersey piqué | Jersey piqué |
| **Force maximale (N)** | 1391 | 1320 | 1297 |
| **Allongement à la rupture (%)** | 167 | 152 | 182 |
| **Force à 100% d'allongement** | 549 | 542 | 462 |
| **Force à 50% d'allongement** | 148 | 48,1 | 39,1 |

**Tableau 2**

| **Pneumatique** | **10** | |
|---|---|---|
| | **Première zone 45₁** | **Deuxième zone 45₂** |
| **Nature du brin** | N94/2 | N94/2 |
| **Contexture du tricot** | Jersey piqué | Jersey piqué |
| **Méthode utilisée dans la norme NF EN 14971** | B | B |
| **Face de mesurage** | Endroit technique | Endroit technique |
| **Moyenne des résultats individuels (colonne/cm)** | 3,0 | 3,0 |
| **Moyenne des résultats individuels (rangée/cm)** | 5,2 | 4,8 |
| **Densité surfacique (maille/cm²)** | 15,6 | 14,4 |

Le pneumatique T1 est identique au pneumatique 10 à l'exception qu'il est dépourvu de tricot. Le pneumatique T2 comprend, en plus des éléments du pneumatique T1, une deuxième nappe de carcasse. Le pneumatique T3 est identique au pneumatique T1 à l'exception que ses flancs présentent une épaisseur supérieure de 10 mm par rapport à celle des flancs du pneumatique T1.

On a soumis les différents pneumatiques T1 à T3 et 10 à un test de poussée de dérive Dz décrit ci-dessous. On a également mesuré la masse de chaque pneumatique T1 à T3 et 10.

Les résultats sont donnés en base 100 par rapport au pneumatique T1. Ainsi, pour la poussée de dérive Dz, plus la valeur est supérieure à 100, meilleure est la poussée de dérive du pneumatique testé par rapport au pneumatique T1. Pour la masse, plus la valeur est inférieure à 100, plus lourd est le pneumatique testé par rapport au pneumatique T1.

Pour mesurer la poussée de dérive Dz, on a fait rouler chaque pneumatique à une vitesse constante de 80 km/h sur une machine automatique appropriée (machine type "sol-plan" commercialisée par la société MTS), en faisant varier la charge notée "Z", sous un angle de dérive relativement élevé de 8 degrés, et on a mesuré de manière continue la poussée de dérive et identifié la rigidité de dérive notée « D » (corrigée de la poussée à dérive nulle), en enregistrant à l'aide de capteurs l'effort transversal sur la roue en fonction de cette charge Z ; on obtient ainsi la rigidité de dérive. On obtient alors, pour une charge choisie, ici 482 daN, la valeur reportée Dz.

On a rassemblé les résultats de ces tests dans le tableau 3 ci-dessous.

**Tableau 3**

| **Pneumatique** | **T1** | **T2** | **T3** | **10** |
|---|---|---|---|---|
| **Poids (base 100)** | 100 | 93 | 81 | 96 |
| **Dz (base 100)** | 100 | 100 | 108 | 105 |

On note que le pneumatique 10 selon l'invention présente une masse relativement proche de celle du pneumatique T1 et en tout cas, inférieure à celle du pneumatique T2 et surtout celle du pneumatique T3. En outre, on note que le pneumatique 10 selon l'invention présente une rigidité de dérive Dz supérieure à celles des pneumatiques T1 et T2. Ainsi, le pneumatique 10 selon l'invention présente un meilleur compromis entre masse et rigidité de dérive que celui des pneumatiques T1 à T3.

Les avantages décrits ci-dessus viennent évidemment en plus de l'avantage principal lié à l'invention, à savoir la réduction de la différence de capacité de renforcement et d'allongement entre différentes zones du tricot générée lors de la conformation du pneumatique.

L'invention ne se limite pas aux modes de réalisation décrits ci-dessus.

On pourra également combiner les caractéristiques des différents modes de réalisation décrits ou envisagés ci-dessus sous réserve que celles-ci soient compatibles entre elles sans sortir du cadre défini dans les revendications.

## Revendications

1. Pneumatique (10), comprenant une armature de carcasse (32) ancrée dans deux bourrelets (24) et surmontée radialement par une armature de sommet (14) elle-même surmontée d'une bande de roulement (20) qui est réunie aux bourrelets par deux flancs (22),**caractérisé en ce que** chaque flanc (22)comprend un tricot (44) comprenant :
- des colonnes (C1, C2, C3, C4) de boucles (V), les boucles (V) d'une même colonne (C1, C2, C3, C4) étant agencées les unes à la suite des autres sensiblement selon une direction générale dite principale (Y1),
- des rangées (R1, R2, R3, R4) de boucles (V), les boucles (V) d'une même rangée (R1, R2, R3, R4) étant agencées les unes à côtés des autres sensiblement selon une direction générale dite transverse (Z1),
le tricot (44) comprenant des première et deuxième zones (45₁, 45₂), la première zone (45₁) du tricot (44) présentant un rayon de courbure inférieur au rayon de courbure de la deuxième zone (45₂) du tricot (44), lesdites première et deuxième zones (45₁, 45₂) présentant chacune respectivement, au moins selon l'une des directions principale (Y1) ou transverse (Z1), une force à 100 % d'allongement FT₁₀₀ et FS₁₀₀ vérifiant FS₁₀₀< FT₁₀₀, où FT₁₀₀ est la force à 100% d'allongement de la première zone (45₁) et FS₁₀₀ est la force à 100% d'allongement de la deuxième zone (45₂), chaque force FT₁₀₀ et FS₁₀₀ étant déterminée à partir d'une courbe force-allongement obtenue en appliquant la norme ISO 13934-1:2013 au tricot (44) préalablement à son intégration dans le pneumatique (10).

2. Pneumatique (10) selon la revendications précédentes, dans lequel la deuxième zone (45₂) est agencée radialement à l'extérieur de la première zone (45₁).

3. Pneumatique (10) selon l'une quelconque des revendications précédentes, dans lequel chaque force à 100% d'allongement FT₁₀₀ et FS₁₀₀ de chaque première et deuxième zone (45₁, 45₂) est mesurée selon une direction du tricot (44) sensiblement parallèle à la direction circonférentielle (Z) du pneumatique (10).

4. Pneumatique (10) selon l'une quelconque des revendications précédentes, dans lequel la première zone (45₁) diffère de la deuxième zone (45₂) de par au moins une caractéristique choisie parmi la contexture, la taille de maille, la densité linéique de colonnes de mailles mesurée selon la norme NF EN 14971, la densité linéique de rangées de mailles mesurée selon la norme NF EN 14971, la densité surfacique de mailles mesurée selon la norme NF EN 14971 ou un mélange de ces caractéristiques.

5. Pneumatique (10) selon l'une quelconque des revendications précédentes, dans lequel l'armature de carcasse (32) est ancrée dans chaque bourrelet (24) par un retournement autour d'une structure annulaire (26) du bourrelet (24) de manière à former un brin aller (38) et un brin retour (40).

6. Pneumatique (10) selon la revendication précédente, dans lequel la distance radiale (D1) entre l'extrémité radialement intérieure du tricot (44) et le plan radialement médian (P1) de la structure annulaire (26) du bourrelet (24) est inférieure ou égale à 15 mm, de préférence à 10 mm et plus préférentiellement à 5 mm.

7. Pneumatique (10) selon l'une quelconque des revendications précédentes, dans lequel la distance axiale (D4) entre l'extrémité radialement extérieure (P4) du tricot (44) et l'extrémité axialement extérieure (P3) d'une nappe de sommet (18) radialement adjacente au tricot (44) est inférieure ou égale à 15 mm, de préférence à 10 mm et plus préférentiellement à 5 mm.

8. Pneumatique (10) selon la revendication précédente, dans lequel la première zone (45₁) s'étend radialement entre des premier et deuxième points (Z1, Z2) de la première zone (45₁), le premier point (Z1) de la première zone (45₁) étant radialement intérieur par rapport au deuxième point (Z2) de la première zone (45₁).

9. Pneumatique (10) selon la revendication 8, dans lequel le deuxième point (Z2) de la première zone (45₁) est radialement intérieur par rapport à l'équateur (E) du pneumatique (10).

10. Pneumatique (10) selon la revendication 8 ou 9, dans lequel chaque premier et deuxième point (Z1, Z2) de la première zone (45₁) est radialement extérieur par rapport au plan radialement médian (P1) de la structure annulaire (26) du bourrelet (24).

11. Pneumatique (10) selon l'une quelconque des revendications précédentes, dans lequel l'extrémité radialement extérieure (P4) du tricot (44) est radialement intercalée entre l'armature de carcasse (32) et l'armature de sommet (14).

12. Utilisation pour le renforcement d'un pneumatique (10) d'un tricot (44) comprenant :
- des colonnes (C1, C2, C3, C4) de boucles (V), les boucles (V) d'une même colonne (C1, C2, C3, C4) étant agencées les unes à la suite des autres sensiblement selon une direction générale dite principale (Y1),
- des rangées (R1, R2, R3, R4) de boucles (V), les boucles (V) d'une même rangée (R1, R2, R3, R4) étant agencées les unes à côtés des autres sensiblement selon une direction générale dite transverse (Z1),
le tricot (44) comprenant des première et deuxième zones (45₁, 45₂) la première zone (45₁) du tricot (44) présentant un rayon de courbure inférieur au rayon de courbure de la deuxième zone (45₂) du tricot (44), lesdites première et deuxième zones (45₁, 45₂) présentant chacune respectivement, au moins selon l'une des directions principale (Y1) ou transverse (Z1), une force à 100 % d'allongement FT₁₀₀ et FS₁₀₀ vérifiant FS₁₀₀< FT₁₀₀, où FT₁₀₀ est la force à 100% d'allongement de la première zone (45₁) et FS₁₀₀ est la force à 100% d'allongement de la deuxième zone (45₂), chaque force FT₁₀₀ et FS₁₀₀ étant déterminée à partir d'une courbe force-allongement obtenue en appliquant la norme ISO 13934-1:2013,
le pneumatique (10) comprenant une armature de carcasse (32) ancrée dans deux bourrelets (24) et surmontée radialement par une armature de sommet (14) elle-même surmontée d'une bande de roulement (20) qui est réunie aux bourrelets par deux flancs (22), chaque flanc (22) comprenant ledit tricot (44).

13. Procédé de fabrication d'un pneumatique (10) selon l'une quelconque des revendications 1 à 11, dans lequel on noie le tricot (44) dans une matrice d'élastomère.

## Patentansprüche

1. Reifen (10), umfassend eine Karkassenbewehrung (32), die in zwei Wülsten (24) verankert ist und über der radial eine Scheitelbewehrung (14) angebracht ist, über der selbst eine Lauffläche (20) angebracht ist, die durch zwei Flanken (22) mit den Wülsten verbunden ist, **dadurch gekennzeichnet, dass** jede Flanke (22) ein Trikot (44) aufweist, umfassend:
- Spalten (C1, C2, C3, C4) von Schlaufen (V), wobei die Schlaufen (V) von einer gleichen Spalte (C1, C2, C3, C4) im Wesentlichen in einer allgemeinen Richtung, die Hauptrichtung (Y1) genannt wird, nacheinander angeordnet sind,
- Reihen (R1, R2, R3, R4) von Schlaufen (V), wobei die Schlaufen (V) von einer gleichen Reihe (R1, R2, R3, R4) im Wesentlichen in einer allgemeinen Richtung, die Querrichtung (Z1) genannt wird, nebeneinander angeordnet sind,
wobei das Trikot (44) einen ersten und zweiten Bereich (45₁, 45₂) aufweist, wobei der erste Bereich (45₁) des Trikots (44) einen Krümmungsradius aufweist, der kleiner als der Krümmungsradius des zweiten Bereichs (45₂) des Trikots (44) ist, wobei der erste und zweite Bereich (45₁, 45₂) jeweils mindestens in einer der Hauptrichtung (Y1) oder Querrichtung (Z1) eine Kraft bei 100 % Dehnung FT₁₀₀ und FS₁₀₀ aufweisen, die FS₁₀₀ < FT₁₀₀ erfüllen, wobei FT₁₀₀ die Kraft bei 100 % Dehnung des ersten Bereichs (45₁) und FS₁₀₀ die Kraft bei 100 % Dehnung des zweiten Bereichs (45₂) ist, wobei jede Kraft FT₁₀₀ und FS₁₀₀ aus einer Kraft-Dehnungs-Kurve bestimmt ist, die durch Anwenden der Norm ISO 13934-1:2013 auf das Trikot (44) vor seinem Integrieren in den Reifen (10) erhalten wird.

2. Reifen (10) nach dem vorhergehenden Anspruch, wobei der zweite Bereich (45₂) radial außerhalb des ersten Bereichs (45₁) angeordnet ist.

3. Reifen (10) nach einem der vorhergehenden Ansprüche, wobei jede Kraft bei 100 % Dehnung FT₁₀₀ und FS₁₀₀ von jedem ersten und zweiten Bereich (45₁, 45₂) in einer Richtung des Trikots (44) gemessen wird, die im Wesentlichen parallel zu der Umfangsrichtung (Z) des Reifens (10) ist.

4. Reifen (10) nach einem der vorhergehenden Ansprüche, wobei sich der erste Bereich (45₁) von dem zweiten Bereich (45₂) durch mindestens ein Merkmal unterscheidet, das ausgewählt ist aus der Fadendichte, der Maschengröße, der nach der Norm NF EN 14971 gemessenen linearen Dichte der Maschenspalten, der nach der Norm NF EN 14971 gemessenen linearen Dichte der Maschenreihen, der nach der Norm NF EN 14971 gemessenen Flächendichte der Maschen oder einer Mischung dieser Merkmale.

5. Reifen (10) nach einem der vorhergehenden Ansprüche, wobei die Karkassenbewehrung (32) in jedem Wulst (24) durch einen Umschlag um eine ringförmige Struktur (26) des Wulstes (24) derart verankert ist, um einen Vorwärtsstrang (38) und einen Rückstrang (40) zu bilden.

6. Reifen (10) nach dem vorhergehenden Anspruch, wobei der distale Abstand (D1) zwischen dem radial inneren Ende des Trikots (44) und der radialen Mittelebene (P1) der ringförmigen Struktur (26) des Wulstes (24) kleiner als oder gleich 15 mm, vorzugsweise gleich 10 mm und insbesondere gleich 5 mm ist.

7. Reifen (10) nach einem der vorhergehenden Ansprüche, wobei der axiale Abstand (D4) zwischen dem radial äußeren Ende (P4) des Trikots (44) und dem axial äußeren Ende (P3) eines Zwischenbaus (18), der radial an dem Trikots (44) angrenzend ist, kleiner als oder gleich 15 mm, vorzugsweise gleich 10 mm und insbesondere gleich 5 mm ist.

8. Reifen (10) nach dem vorhergehenden Anspruch, wobei sich der erste Bereich (45₁) radial zwischen einem ersten und einem zweiten Punkt (Z1, Z2) des ersten Bereichs (45₁) erstreckt, wobei der erste Punkt (Z1) des ersten Bereichs (45₁) gegenüber dem zweiten Punkt (Z2) des ersten Bereichs (45₁) radial innenliegend ist.

9. Reifen (10) nach Anspruch 8, wobei der zweite Punkt (Z2) des ersten Bereichs (45₁) gegenüber dem Äquator (E) des Reifens (10) radial innenliegend ist.

10. Reifen (10) nach Anspruch 8 oder 9, wobei jeder erste und zweite Punkt (Z1, Z2) des ersten Bereichs (45₁) gegenüber der radialen Mittelebene (P1) der ringförmigen Struktur (26) des Wulstes (24) radial außenliegend ist.

11. Reifen (10) nach einem der vorhergehenden Ansprüche, wobei das radial äußere Ende (P4) des Trikots (44) radial zwischen der Karkassenbewehrung (32) und der Scheitelbewehrung (14) eingefügt ist.

12. Verwendung für die Verstärkung eines Reifens (10) eines Trikots (44), umfassend:
- Spalten (C1, C2, C3, C4) von Schlaufen (V), wobei die Schlaufen (V) von einer gleichen Spalte (C1, C2, C3, C4) im Wesentlichen in einer allgemeinen Richtung, die Hauptrichtung (Y1) genannt wird, nacheinander angeordnet sind,
- Reihen (R1, R2, R3, R4) von Schlaufen (V), wobei die Schlaufen (V) von einer gleichen Reihe (R1, R2, R3, R4) im Wesentlichen in einer allgemeinen Richtung, die Querrichtung (Z1) genannt wird, nebeneinander angeordnet sind,
wobei das Trikot (44) einen ersten und zweiten Bereich (45₁, 45₂) aufweist, wobei der erste Bereich (45₁) des Trikots (44) einen Krümmungsradius aufweist, der kleiner als der Krümmungsradius des zweiten Bereichs (45₂) des Trikots (44) ist, wobei der erste und zweite Bereich (45₁, 45₂) jeweils mindestens in einer der Hauptrichtung (Y1) oder Querrichtung (Z1) eine Kraft bei 100 % Dehnung FT₁₀₀ und FS₁₀₀ aufweisen, die FS₁₀₀ < FT₁₀₀ erfüllen, wobei FT₁₀₀ die Kraft bei 100 % Dehnung des ersten Bereichs (45₁) und FS₁₀₀ die Kraft bei 100 % Dehnung des zweiten Bereichs (45₂) ist, wobei jede Kraft FT₁₀₀ und FS₁₀₀ aus einer Kraft-Dehnungs-Kurve bestimmt ist, die durch Anwenden der Norm ISO 13934-1:2013 erhalten wird,
wobei der Reifen (10) eine Karkassenbewehrung (32) aufweist, die in zwei Wülsten (24) verankert ist und über der radial eine Scheitelbewehrung (14) angebracht ist, über der selbst eine Lauffläche (20) angebracht ist, die durch zwei Flanken (22) mit den Wülsten verbunden ist, wobei jede Flanke (22) das Trikot (44) aufweist.

13. Verfahren zur Herstellung eines Reifens (10) nach einem der Ansprüche 1 bis 11, wobei das Trikot (44) in eine elastomere Matrix eingebettet ist.

## Claims

1. Tyre (10), comprising a carcass reinforcement (32) anchored in two beads (24) and surmounted radially by a crown reinforcement (14) itself surmounted by a tread (20) which is connected to the beads by two sidewalls (22), **characterized in that** each sidewall (22) comprises a knit (44) comprising:
- columns (C1, C2, C3, C4) of loops (V), the loops (V) of one and the same column (C1, C2, C3, C4) being arranged one after the other substantially in an overall direction referred to as the main direction (Y1),
- rows (R1, R2, R3, R4) of loops (V), the loops (V) of one and the same row (R1, R2, R3, R4) being arranged one beside the other substantially in an overall direction referred to as the transverse direction (Z1), the knit (44) comprising first and second zones (45₁, 45₂), the first zone (45₁) of the knit (44) having a radius of curvature less than the radius of curvature of the second zone (45₂) of the knit (44), said first and second zones (45₁, 45₂) each respectively having, at least in one of the main (Y1) or transverse (Z1) directions, a force FT₁₀₀ and FS₁₀₀ at 100% elongation that satisfies FS₁₀₀< FT₁₀₀, where FT₁₀₀ is the force at 100% elongation of the first zone (45₁) and FS₁₀₀ is the force at 100% elongation of the second zone (45₂), each force FT₁₀₀ and FS₁₀₀ being determined from a force-elongation curve obtained by applying standard ISO 13934 1:2013 to the knit (44) before it is incorporated into the tyre (10).

2. Tyre (10) according to the preceding claim, in which the second zone (45₂) is arranged radially on the outside of the first zone (45₁).

3. Tyre (10) according to either one of the preceding claims, in which each force FT₁₀₀ and FS₁₀₀ at 100% elongation of each first and second zone (45₁, 45₂) is measured in a direction of the knit (44) that is substantially parallel to the circumferential direction (Z) of the tyre (10).

4. Tyre (10) according to any one of the preceding claims, in which the first zone (45₁) differs from the second zone (45₂) in terms of at least one feature selected from the construction, the stitch size, the linear density of columns of stitches as measured in accordance with standard NF EN 14971, the linear density of rows of stitches as measured in accordance with standard NF EN 14971, the surface density of stitches as measured in accordance with standard NF EN 14971, or a combination of these features.

5. Tyre (10) according to any one of the preceding claims, in which the carcass reinforcement (32) is anchored in each bead (24) by being turned up around an annular structure (26) of the bead (24) so as to form a main strand (38) and a turn up (40).

6. Tyre (10) according to the preceding claim, in which the radial distance (D1) between the radially inner end of the knit (44) and the radially median plane (P1) of the annular structure (26) of the bead (24) is less than or equal to 15 mm, preferably less than or equal to 10 mm and more preferably less than or equal to 5 mm.

7. Tyre (10) according to any one of the preceding claims, in which the axial distance (D4) between the radially outer end (P4) of the knit (44) and the axially outer end (P3) of a crown ply (18) radially adjacent to the knit (44) is less than or equal to 15 mm, preferably less than or equal to 10 mm, and more preferably less than or equal to 5 mm.

8. Tyre (10) according to the preceding claim, in which the first zone (45₁) extends radially between first and second points (Z1, Z2) of the first zone (45₁), the first point (Z1) of the first zone (45₁) being radially on the inside in relation to the second point (Z2) of the first zone (45₁).

9. Tyre (10) according to Claim 8, in which the second point (Z2) of the first zone (45₁) is radially on the inside in relation to the equator (E) of the tyre (10) .

10. Tyre (10) according to Claim 8 or 9, in which each first and second point (Z1, Z2) of the first zone (45₁) is radially on the outside in relation to the radially median plane (P1) of the annular structure (26) of the bead (24).

11. Tyre (10) according to any one of the preceding claims, in which the radially outer end (P4) of the knit (44) is interposed radially between the carcass reinforcement (32) and the crown reinforcement (14).

12. Use, for reinforcing a tyre (10), of a knit (44) comprising:
- columns (C1, C2, C3, C4) of loops (V), the loops (V) of one and the same column (C1, C2, C3, C4) being arranged one after the other substantially in an overall direction referred to as the main direction (Y1),
- rows (R1, R2, R3, R4) of loops (V), the loops (V) of one and the same row (R1, R2, R3, R4) being arranged one beside the other substantially in an overall direction referred to as the transverse direction (Z1), the knit (44) comprising first and second zones (45₁, 45₂), the first zone (45₁) of the knit (44) having a radius of curvature less than the radius of curvature of the second zone (45₂) of the knit (44), said first and second zones (45₁, 45₂) each respectively having, at least in one of the main (Y1) or transverse (Z1) directions, a force FT₁₀₀ and FS₁₀₀ at 100% elongation that satisfies FS₁₀₀< FT₁₀₀, where FT₁₀₀ is the force at 100% elongation of the first zone (45₁) and FS₁₀₀ is the force at 100% elongation of the second zone (45₂), each force FT₁₀₀ and FS₁₀₀ being determined from a force elongation curve obtained by applying standard ISO 13934 1:2013, the tyre (10) comprising a carcass reinforcement (32) anchored in two beads (24) and surmounted radially by a crown reinforcement (14) itself surmounted by a tread (20) which is connected to the beads by two sidewalls (22), each sidewall (22) comprising said knit (44).

13. Method of manufacturing a tyre (10) according to any one of Claims 1 to 11, in which the knit (44) is embedded in an elastomer matrix.
